# EUROPEAN PATENT APPLICATION

(11) **EP 3 421 216 A1**
(43) Date of publication of application: **02.01.2019**
(21) Application number: 17774951.2
(22) Date of filing: 27.03.2017
(51) Int. Cl.: B29C 45/27, B29C 45/00, B29C 45/73

(54) **INJECTION MOLDING APPARATUS AND INJECTION MOLDING METHOD**

(30) Priority: 31.03.2016 JP 2016071638
(71) Applicant: Mazda Motor Corporation, Aki-gun, Hiroshima 735-8670 (JP)
(72) Inventor: TAKATORI, Hiroyuki, Yamaguchi 755-8633 (JP); IWAMOTO, Michihisa, Hiroshima 730-8670 (JP); TANAKA, Takahiro, Hiroshima 730-8670 (JP); NISHIMURA, Kenji, Hiroshima 730-8670 (JP)
(74) Representative: Thoma, Michael
(86) International application number: PCT/JP2017/012410
(87) International publication number: WO 2017/170414

(57) **Abstract**

In injection-molding a conductive material, prolongation of an injection molding cycle and occurrence of defective appearance of a molded article are reduced, and the molded article is given uniform conductivity. An injection molding apparatus has a heating injection means which heats a conductive material to a temperature that allows the conductive material to melt and flow, and which injects the conductive material to a mold. The mold has a plurality of conductive portions at least at a portion of a surface defining a cavity, the conductive portions being insulated from each other. A predetermined voltage is applied to the conductive portions. A static mixer is provided in an area including a tip portion of the heating injection means and a flow path of the conductive material.

## Description

### TECHNICAL FIELD

The present invention relates to an injection molding apparatus and an injection molding method, and particularly relates to an injection molding apparatus and an injection molding method for injection molding of a conductive material.

### BACKGROUND ART

Injection molding using an injection molding apparatus has been known. Specifically, such injection molding includes: a step of heating a resin material to a temperature that allows the resin material to melt and flow, using an injection molding apparatus; a step of filling the melted resin material in a cavity of a mold clamped in advance; a step of pressure-holding and cooling the melted resin material filling the cavity; and a step of opening the mold and taking the molded article out of the mold.

Examples of the molded article obtained through the injection molding using an injection molding apparatus include automobile components, such as bumpers. In recent years, an injection molding technique which allows production of a thin and large-sized article has been demanded in order to meet the needs, for example, to further lighten the automobile components, such as bumpers. In injection-molding a thin and large-sized article, insufficient injection pressure may produce a situation in which the cavity is not filled with a melted resin material up to an end portion thereof.

The injection pressure may be increased to avoid insufficient injection pressure. However, the mold needs to be clamped by a clamping pressure according to the intensity of the injection pressure. Thus, a large injection molding apparatus having a high clamping pressure and a large mold capable of withstanding the injection pressure and the clamping pressure are required. Alternatively, the number of gates may be increased or the thickness of the article to be molded may be increased to avoid problems caused by the insufficient injection pressure. However, the former case may result in an increase in the number of portions where weld marks are formed, and the latter case may result in an increase in material costs.

To deal with this problem, Patent Document 1 discloses so-called heat-and-cool molding in which heating and cooling of a mold are repeated. According to this method, the mold is heated at the time of injection, thereby indirectly heating the resin material injected in the cavity and moderating a temperature drop of the resin material. A reduction in the flowability of the resin material can thus be substantially prevented without increasing the injection pressure and changing the number of gates or the thickness of the article to be molded.

Further, in recent years, a conductive material, which is a mixture of an insulating resin material and a conductive filler, is used in injection molding in order to give conductivity necessary for electrostatic coating to a resin molded article. With respect to this, Patent Document 2 discloses a nozzle of an injection molding apparatus, in which a conductive material in a flow path of the nozzle is heated by current application before being supplied into the cavity.

### CITATION LIST

### PATENT DOCUMENTS

Patent Document 1: Japanese Unexamined Patent Publication No. 2008-055894
Patent Document 2: Japanese Unexamined Patent Publication No. 2003-340896

### SUMMARY OF THE INVENTION

### TECHNICAL PROBLEM

However, in Patent Document 1, a mold temperature increases due to the need to heat the mold having a larger heat capacity than the melted resin material to be filled therein. A higher mold temperature requires more time for cooling the mold and the molded article, which may prolong an injection molding cycle from injection to unloading the molded article.

In Patent Document 2, the melted resin material injected in the cavity from the nozzle is cooled from a surface that has come into contact with a surface defining the cavity. Such cooling leads to solidification of the melted resin material, and impairs the flowability of the melted resin material. The impaired flowability may cause a situation in which the cavity is not filled with the melted resin material up to an end portion, which may result in defective appearance of the molded article due to insufficient filling of the cavity with the melted resin material.

Further, in a case of using, as the melted resin material, a conductive material containing conductive substances such as conductive fillers, the conductive substances may not be uniformly dispersed in the conductive material. Such ununiform dispersion of the conductive substances may lead to ununiform conductivity of the thus obtained molded article.

It is therefore an objective of the present invention to provide an injection molding apparatus and an injection molding method, for injection molding of a conductive material, which can reduce prolongation of an injection molding cycle and occurrence of defective appearance of a molded article, and give uniform conductivity to the molded article.

### SOLUTION TO THE PROBLEM

To achieve the above objective, an embodiment of the present invention is directed to an injection molding apparatus which includes a heating injection means which heats a conductive material to a temperature that allows the conductive material to melt and flow, and which injects the conductive material to a mold. The mold has a plurality of conductive portions at least at a portion of a surface defining a cavity, the conductive portions being insulated from each other. The injection molding apparatus has an energizing means which applies a predetermined voltage to the conductive portions. A static mixer is provided in an area including a tip portion of the heating injection means and a flow path of the conductive material.

To achieve the above objective, an embodiment of the present invention is directed to an injection molding method for injection-molding an article by injecting a conductive material into a mold. The method includes: a heating injection step of heating the conductive material to a temperature that allows the conductive material to melt and flow, and injecting the conductive material into the mold, by using a heating injection means; and an energizing step of applying a voltage to a plurality of conductive portions such that the conductive material injected is heated by current application when the conductive material comes into contact with the plurality of conductive portions, the conductive portions being provided at least at a portion of a surface of the mold defining a cavity and being insulated from each other. The conductive material is mixed prior to being introduced into the cavity, by a static mixer provided in an area including a tip portion of the heating injection means and a flow path of the conductive material.

### ADVANTAGES OF THE INVENTION

According to the present invention, in injection-molding a conductive material, it is possible to reduce prolongation of an injection molding cycle and occurrence of defective appearance of a molded article, and is also possible to give uniform conductivity to the molded article.

### BRIEF DESCRIPTION OF THE DRAWINGS

FIG. 1 schematically illustrates a configuration of an injection molding apparatus according to an embodiment of the present invention.
FIG. 2 is a cross-sectional view schematically illustrating a flow of a fluid conductive material flowing through a static mixer.
FIG. 3A is a cross-sectional view taken along the line A-A of the static mixer shown in FIG. 2. FIG. 3B is a cross-sectional view taken along the line B-B of the static mixer shown in FIG. 2.
FIG. 4 is a perspective view schematically illustrating the appearance of the static mixer.
FIG. 5 is a cross-sectional view schematically illustrating a mold device having a sprue and a runner branched from the sprue.
FIG. 6 is an enlarged cross-sectional view schematically illustrating a state in which the conductive material is heated by current application.
FIG. 7 is a graph showing changes of a leak current between conductive portions for each shot.
FIG. 8 is a flowchart showing an injection molding cycle.
FIG. 9 is a flowchart of the step of checking insulation between molds, which is one of steps in FIG. 8.
FIG. 10 is a flowchart of the energization step, which is one of the steps in FIG. 8.
FIG. 11 is a timing diagram showing operations of the injection molding apparatus.

### DESCRIPTION OF EMBODIMENT

### <General Configuration of Injection Molding Apparatus>

First, before describing a characteristic configuration of the injection molding apparatus of the present embodiment, the general configuration of the injection molding apparatus of the present embodiment will be described with reference to the drawings.

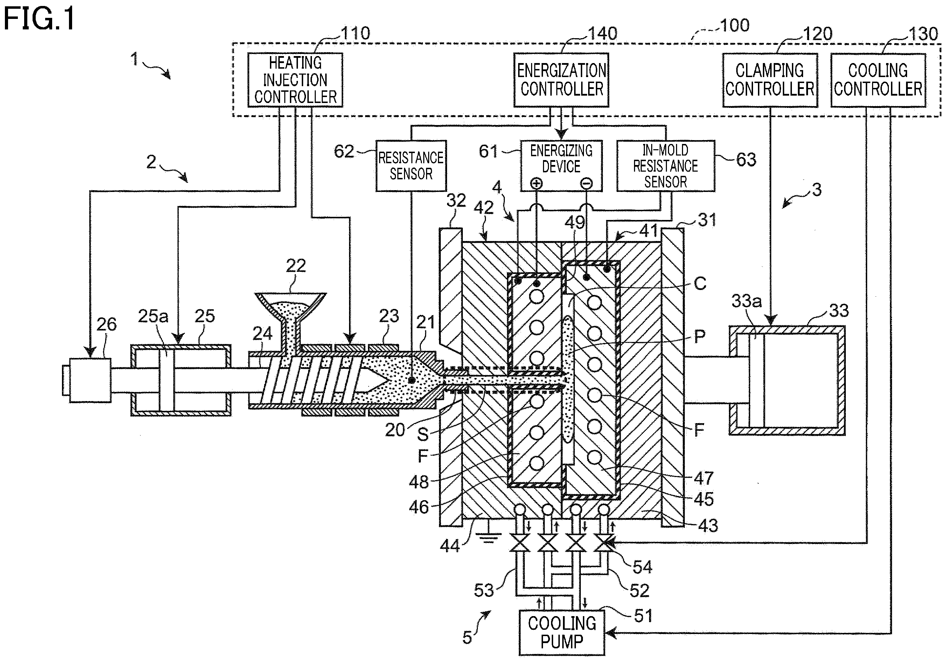

As shown in FIG. 1, an injection molding apparatus 1 of the present embodiment is comprised of a heating injection device 2 and a clamping device 3 provided so as to face the heating injection device 2. The heating injection device 2 and the clamping device 3 are provided on a base frame (not shown).

### (Heating Injection Device)

The heating injection device 2 has an injection cylinder 21. An upper portion of the injection cylinder 21 is provided with a hopper 22 for supplying a thermoplastic resin in the form of pellets, which is a raw material for an article to be molded, into the injection cylinder 21. A band heater 23 for heating the thermoplastic resin to a temperature that allows the thermoplastic resin to melt and flow is wound around the injection cylinder 21. A screw 24 is provided in the injection cylinder 21 so as to be rotatable and capable of advancing and retracting.

Provided behind the screw 24 (left side of FIG. 1) is an injection cylinder device 25, which serves as a drive source for advancing and retracting the screw 24. An injection piston 25a is provided in the injection cylinder device 25. A hydraulic fluid is used to advance or retract the injection piston 25a.

The injection piston 25a is connected to a base end of the screw 24. Advancing or retracting movement of the injection piston 25a in the injection cylinder device 25 causes the screw 24 to advance or retract in the injection cylinder 21. A position detector is connected to the injection piston 25a. The position detector detects a position of the screw 24.

Provided behind the injection cylinder device 25 is a measurement motor 26, which serves as a drive source for rotating the screw 24. The injection cylinder 21, the screw 24, the injection cylinder device 25, and the measurement motor 26, which are components of the heating injection device 2, are coaxially provided.

### (Clamping Device)

The clamping device 3 is provided with a mold device 4. The mold device 4 is comprised of a movable mold 41 and a fixed mold 42, which have mold-matching surfaces opposed to each other at the time of clamping. When clamped, the movable mold 41 and the fixed mold 42 form a cavity C into which a melted resin material injected from the heating injection device 2 is injected. A flow path F in which a cooling liquid, such as a coolant, flows is formed in each of the movable mold 41 and the fixed mold 42. The clamping device 3 includes a movable attachment plate 31 to which the movable mold 41 is attached, a fixed attachment plate 32 to which the fixed mold 42 is attached, and a clamping cylinder device 33 which serves as a drive source for advancing and retracting the movable attachment plate 31.

A linearly movable clamping piston 33a is provided in the clamping cylinder device 33. A hydraulic fluid supplied into the clamping cylinder device 33 causes the clamping injection piston 33a to advance or retract in the clamping cylinder device 33. The movable attachment plate 31 is connected to a forward end (left side end of FIG. 1) of the clamping piston 33a. The advancing or retracting movement of the clamping piston 33a in the clamping cylinder device 33 causes the movable mold 41 attached to the movable attachment plate 31 to advance or retract. In this manner, the advancing movement (leftward movement in FIG. 1) of the clamping piston 33a causes the movable mold 41 attached to the movable attachment plate 31 to advance. As a result, the mold is closed and clamped. Further, the retracting movement (rightward movement in FIG. 1) of the clamping piston 33a causes the movable mold 41 attached to the movable attachment plate 31 to retract. As a result, the mold is opened.

A back face (a right-side surface of FIG. 1) of the movable attachment plate 31 is provided with an ejector. The ejector is configured to be capable of pushing and taking the molded article out of the cavity when the mold device 4 is opened. Although FIG. 1 illustrates the clamping device 3 of a linear motion type, a toggle clamping device having a toggle mechanism between the clamping cylinder device 33 and the movable attachment plate 31 may also be used.

The injection molding apparatus 1 of the present embodiment further includes a cooling device 5 for cooling the mold device 4. The cooling device 5 has a cooling pump 51. The cooling pump 51 is connected to the movable mold 41 and the fixed mold 42 through a supply pipe 52 and a discharge pipe 53 for the cooling liquid. The supply pipe 52 and the discharge pipe 53 are each provided with a shut-off valve 54 for shutting off the flow of the cooling liquid. The cooling device 5 is capable of cooling the movable mold 41 and the fixed mold 42 by actuating the cooling pump 51, with all the shut-off valves 54 open, and circulating the cooling liquid through the flow paths F of the movable mold 41 and the fixed mold 42. Note that a cooling pump for cooling the movable mold 41 and a cooling pump for cooling the fixed mold 42 may be provided so that the movable mold 41 and the fixed mold 42 are cooled independently of each other.

An insulating liquid may be used as the cooling liquid. The insulating liquid can be selected based on its cooling performance, a temperature at which the mold device is used (a maximum temperature of the mold device), the voltage withstanding capability (a maximum voltage applied by an energizing device, which will be described below) of the insulating liquid, and so on. As the insulating liquid, for example, an electrical insulating oil, a fluorinated inert liquid, or the like, specified in Japanese Industrial Standard (JIS C 2320) can be used. The insulating liquid can prevent a current from leaking to the cooling pump 51 through the cooling liquid at the time of heating by current application which will be described below. Using the insulating liquid is a non-limiting example. The mold device 4 may be cooled by dissipating heat naturally without using any cooling means. Further, the mold device 4 may be cooled by a cooling means, such as a Peltier element.

### <Characteristic Configurations of Injection Molding Apparatus>

Now, characteristic configurations of the injection molding apparatus of the present embodiment will be described below.

First, the mold device 4 of the injection molding apparatus 1 has the following characteristics.

The mold device 4 is comprised of the movable mold 41 and the fixed mold 42, each of which has the following inner structure. That is, the movable mold 41 has an outer portion 43 and a conductive portion 47 provided in the outer portion 43 with an insulating member 45 interposed therebetween. The fixed mold 42 has an outer portion 44 and a conductive portion 48 provided in the outer portion 44 with an insulating member 46 interposed therebetween. The conductive portions 47 and 48 form a surface of the cavity C defined by the movable mold 41 and the fixed mold 42. Specifically, the conductive portions 47 and 48 form at least a portion of the surface of the cavity C defined by the movable mold 41 and the fixed mold 42. Further, as illustrated in FIG. 1, the conductive portions 47 and 48 are opposed to each other with the cavity C interposed therebetween.

The insulating members 45 and 46 are made of at least one selected from the group including, for example, alumina, zirconia, silicon nitride, silicon carbide, polytetrafluoroethylene (PTFE), perfluoroalkoxy alkane (PFA), polyphenylene sulfide (PPS), quartz, titanium oxide, polyetheretherketone (PEEK), polyimide, and polyamide-imide. The insulating members 45 and 46 can be selected based on desired voltage withstanding capability (a maximum voltage applied by an energizing device, which will be described below) of the insulating members 45 and 46, a temperature at which the mold device 4 is used (a maximum temperature of the mold device 4), and so on. The insulating member 45, 46 can be provided between the outer portion 43, 44 and the conductive portion 47, 48 by the techniques such as coating, thermal spraying, spraying, transferring, fitting, in-mold shaping, and bonding.

An insulating member 49 which electrically insulates the conductive portions 47 and 48 from each other is provided on the mold-matching surfaces between the movable mold 41 and the fixed mold 42. Specifically, the insulating member 49 is layered on the mold-matching surfaces so as to cover a surface area of the conductive portion 47 of the movable mold 41. The insulating member 49 is not limited thereto, and may be layered so as to cover at least one of the surface areas of the conductive portion 47 of the movable mold 41 and the conductive portion 48 of the fixed mold 42.

In the present embodiment, a conductive material P is used as a resin material injected from the heating injection device. The conductive material P is a mixture of a resin material and a conductive substance, such as fillers, selected according to desired properties. Examples of the resin material include thermoplastic resin materials. The thermoplastic resin material is at least one selected from the group including, for example, polypropylen, polyamide, polysulphene sulfide, polyimide, polyether ketone, polyetheretherketone, ABS, ASA, and polycarbonate. The conductive substance is at least one selected from the group including, for example, metal-based conductive substances, such as metal fibers, metal powder, and metal flakes, and carbon-based conductive substances, such as carbon fibers, carbon composite fibers, carbon black, and graphite.

The injection molding apparatus 1 has the following characteristics.

### (Heating Conductive Material by Current Application)

The injection molding apparatus 1 has an energizing device 61 for applying a voltage to the conductive portions 47 and 48 described above. The energizing device 61 is a direct-current source which can apply a constant voltage. Alternatively, the energizing device 61 may be an alternating-current source. The heating injection device 2, which is a component of the injection molding apparatus 1, is provided with a resistance sensor 62 which detects an electric resistance value of the conductive material P melted in the injection cylinder 21 by the band heater 23. The resistance sensor 62 outputs a sensor signal, which is input to an energization controller 140 as will be described later.

The conductive portions 47 and 48 are connected to an in-mold resistance sensor 63 which detects a value of electric resistance between the conductive portions 47 and 48. In the present embodiment, the in-mold resistance sensor 63 functions as a sensor which detects a leak current flowing from the conductive portion 48 to the conductive portion 47 through the insulating member 49 in a state where the cavity C is not yet filled with the conductive material P.

The injection molding apparatus 1 of the present embodiment is controlled by a control unit 100, as illustrated in FIG. 1. The control unit 100 includes a heating injection controller 110, a clamping controller 120, a cooling controller 130, and an energization controller 140. The heating injection controller 110 controls the band heater 23, injection cylinder device 25, and measurement motor 26 of the heating injection device 2. The clamping controller 120 controls the clamping cylinder device 33 of the clamping device 3. The cooling controller 130 controls the cooling pump 51 and individual shut-off valves 54 of the cooling device 5.

The voltage controller 140 controls the energizing device 61. Specifically, the voltage controller 140 is configured to carry out ON/OFF control on a predetermined voltage output from the energizing device 61, and control a value of the voltage output from the energizing device 61. Specifically, in the present embodiment, as will be described later in the sequence of control operations on the injection molding apparatus 1, the energization controller 140 controls the voltage to be applied to the conductive portions 47 and 48 by the energizing device 61 so that the conductive material P injected from the heating injection device 2 is heated by current application when coming into contact with the conductive portions 47 and 48. That is, the energizing device 61 is controlled by the energization controller 140 such that the energizing device 61 starts to energize the conductive portions 47 and 48 in conjunction with the start of injection of the conductive material P in order that the conductive material P is heated by current application when coming into contact with the conductive portions 47 and 48.

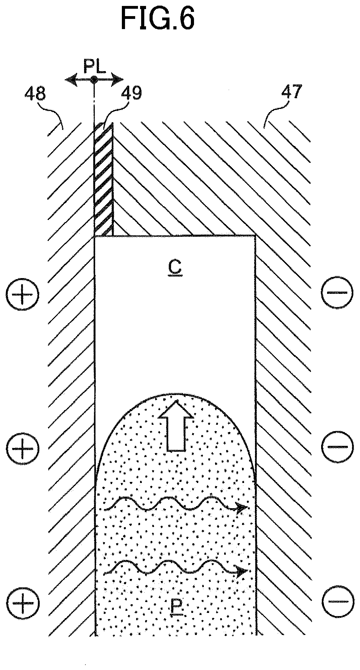

Now, a principle of the "heating of the conductive material P by current application" will be described with reference to FIG. 6. Note that in FIG. 6 and other drawings, the reference character PL indicates a parting line between the movable mold and the fixed mold.

As illustrated in FIG. 6, the conductive material P injected from the heating injection device 2 into the cavity C through the sprue S is cooled from a surface that has come into contact with the surface defining the cavity while moving toward an end portion of the cavity C (corresponding to an upper portion of the cavity C in FIG. 6). In the present embodiment, as described earlier, a voltage is applied to the conductive portions 47 and 48 by the energizing device 61 under control of the energization controller 140. Specifically, a voltage is applied to the conductive portions 47 and 48 by the energizing device 61 under control of the energization controller 140 such that the conductive portion 48 has a higher potential than the conductive portion 47. Such a voltage application allows a current to pass through the conductive material P in the cavity C between the conductive portions 47 and 48 in the thickness direction of the cavity C, that is, from the conductive portion 48 to the conductive portion 47 (see the wavy arrows in the cavity illustrated in FIG. 6). That is, a current flows from the conductive portion 48 to the conductive portion 47 through the conductive material P in the cavity C. The insulating member 49 provided at the mold-matching surfaces to insulate the conductive portions 47 and 48 from each other, as described above, can prevent a current from being directly applied from the conductive portion 48 to the conductive portion 47, and contribute to reliable application of the current to the conductive material P present between the conductive portions 47 and 48.

This current application generates Joule heat due to the electric resistance of the conductive substance contained in the conductive material P. The conductive material P is heated by current application in this manner. The "heating by current application" described herein means, in a broad sense, heating a target medium by passage of the current. In a narrow sense, the "heating by current application" described herein means heating a target medium directly by a current passing through the target medium, and not heating the entire mold device to heat the target medium indirectly. Such heating by current application is performed on the conductive material P which is moving in the cavity C. Thus, the cooling of the conductive material P from a surface that has come into contact with the surface defining the cavity C is reduced. As a result, a reduction in temperature and flowability of the conductive material P moving in the cavity C is reduced. The cavity C can thus be filled with the melted conductive material P up to an end portion. In this manner, insufficient filling of the cavity C with the melted conductive material P can be avoided. As a result, defective appearance, e.g., a weld mark, of the molded article due to insufficient filling of the cavity C with the conductive material P can thus be avoided.

In the present embodiment, the conductive material P itself is heated by current application, that is, it is not that the entire mold device having a larger heat capacity than the conductive material P is heated to heat the conductive material P indirectly. Thus, the temperature of the mold device cannot be higher than necessary, which can save time for cooling the mold device and the molded article. It is therefore possible to reduce prolongation of an injection molding cycle from injection to unloading the molded article. Further, in the present embodiment, it is not necessary to increase the thickness of the article to be molded to avoid a situation in which the cavity C cannot be filled with the conductive material up to an end portion thereof due to a reduction in flowability of the conductive material. This configuration does not require unnecessary conductive material for the increase of the thickness of the molded article. Thus, additional material costs are not needed.

In addition, according to the present embodiment, the energization controller 140 controls the operation of the energizing device 61 based on the injection state of the conductive material P indicated by a control signal output from the heating injection controller 110. This makes it possible to start the current application in conjunction with the injection of the conductive material P. The conductive material P can be heated effectively by the current application.

The mold device 4 of the injection molding apparatus 1 has the following characteristics, as well.

### (Installment of Static Mixer)

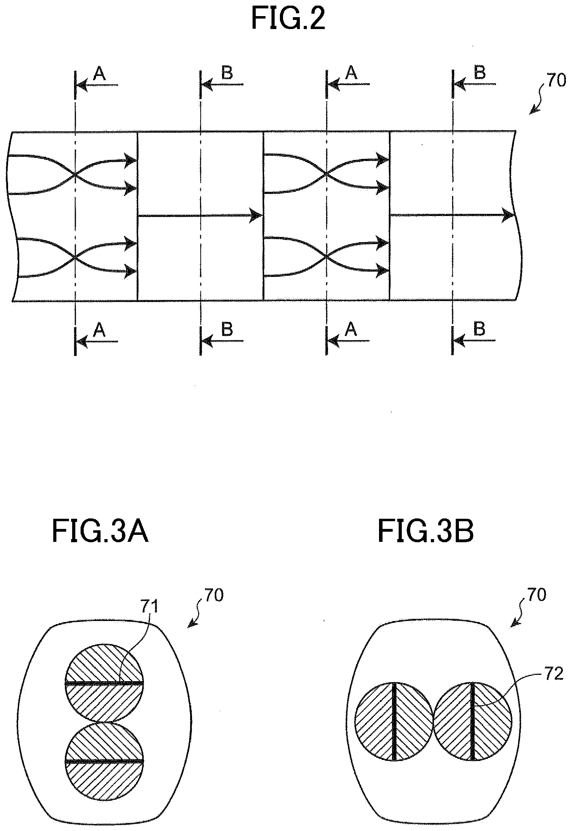

According to the mold device 4 of a direct gate injection type having a linear sprue S as illustrated in FIG. 1, the resin material injected from the heating injection device 2 moves toward the cavity C via the sprue S. As mentioned earlier, in a case of using the conductive material P as a resin material injected from the heating injection device, the conductive substances contained in the conductive material P may not be uniformly dispersed in the conductive material P. Such ununiform dispersion of the conductive substances may cause a situation in which the conductive material cannot be heated uniformly by the current application. To avoid such a situation, in the present embodiment, a static mixer 70, shown in, e.g., FIG. 2, is provided in the whole or part of the area circled in a dotted line shown in FIG. 1 which includes a tip portion 20 of the heating injection device 2 and the sprue S (corresponding to the flow path of the conductive material). The "sprue S" used herein is a flow path through which the conductive material P injected from the heating injection device 2 flows. The "tip portion 20 of the heating injection device 2" used herein includes an injection port, through which the conductive material P is injected, and an adjacent area (peripheral area) of the injection port (see FIG. 1). Further, the "static mixer 70" used herein corresponds to a "static mixer" capable of mixing fluids without a driving system.

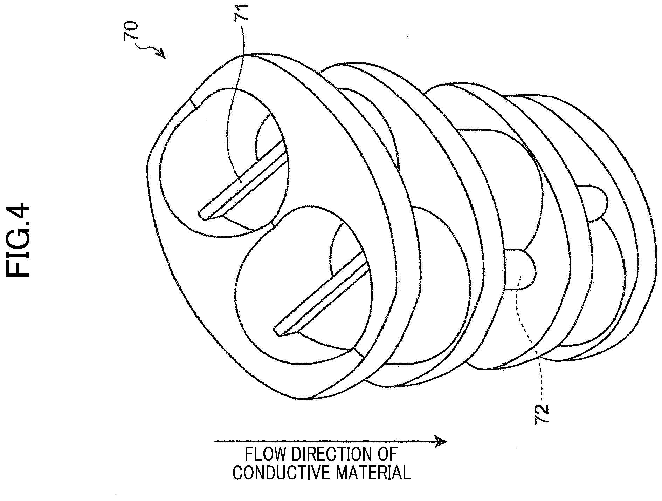

The static mixer 70 has the following structure. Specifically, as illustrated in FIGS. 2 to 4, the static mixer 70 includes a wall 71 arranged so as to divide the inner space of the static mixer 70 into upper and lower spaces on a cross sectional plane A-A, and a wall 72 arranged so as to divide the inner space of the static mixer 70 into left and right spaces on a cross sectional plane B-B. The static mixer 70 is not limited to this configuration, and the wall 71 may be arranged so as to divide the inner space into left and right spaces on the cross sectional plane A-A. Similarly, the wall 72 may be arranged so as to divide the inner space into upper and lower spaces on the cross sectional plane B-B. In a case where the static mixer 70 is provided, the conductive material P injected from the heating injection device 2 moves toward the cavity C via the static mixer 70. In a case where the conductive material P injected from the heating injection device 2 passes through the static mixer 70 configured as described above in one direction, the fluid conductive material P flows through the static mixer 70 in the following manner. Specifically, as illustrated in FIGS. 2 and 3A, the flow of the fluid conductive material P passing through the static mixer 70 is divided into upper and lower flows by the wall 71 arranged in the inner space of the static mixer 70 on the cross sectional plane A-A. Subsequently, as illustrated in FIGS. 2 and 3B, the upper and lower flows of the fluid conductive material P are divided into left and right flows by the wall 72 arranged in the inner space of the static mixer 70 on the cross sectional plane B-B. Subsequently, as illustrated in FIGS. 2 and 3A, the left and right flows of the fluid conductive material P are divided into upper and lower flows by another wall 71 arranged in the inner space of the static mixer 70 on the cross sectional plane A-A. Subsequently, as illustrated in FIGS. 2 and 3B, the upper and lower flows of the fluid conductive material P are divided into left and right flows by the wall 72 arranged in the inner space of the static mixer 70 on the cross sectional plane B-B.

Thus, the conductive material P injected from the heating injection device 2 and passing through the static mixer 70 repeatedly undergoes a process in which the fluid conductive material P is divided into upper and lower flows and a process in which the upper and lower flows of the fluid conductive material P is divided into left and right flows. Repeatedly dividing the flow of the fluid conductive material P into "upper and lower" flows and "left and right" flows "alternately" in the static mixer 70 contributes to mixing the conductive material P without a driving system for applying a mixing force to the conductive material P. The conductive material P is mixed by the static mixer 70 in this manner, allowing the conductive substances contained in the conductive material P to disperse uniformly. That is, the conductive substances can be uniformly dispersed in the resin material.

As mentioned earlier, the conductive material P injected from the heating injection device 2 moves toward the cavity C via the static mixer 70. In other words, the conductive material P passes through the static mixer 70 "before injection into the cavity C." This means that the conductive material P containing the uniformly dispersed conductive substances can be prepared "before injection into the cavity C." Thus, the conductive material P containing the uniformly dispersed conductive substances can be injected into the cavity C. Such uniform dispersion, in the cavity C, of the conductive substances contained in the conductive material P can contribute to uniform conductivity of the thus obtained molded article. Therefore, electrostatic coating or the like can be suitably performed on the obtained molded article due to uniform conductivity of the obtained molded article.

The following effects can be obtained if the conductive substances contained in the conductive material P are uniformly dispersed and a current is applied to such a conductive material P by applying voltage to the conductive portions 47 and 48 by the energizing device 61. Specifically, Joule heat is generated not locally, but "entirely" in the cavity C due to the electric resistance of the uniformly dispersed conductive substances. Thus, uniform heating of the conductive material P by current application can be achieved in the cavity C.

Such uniform heating by current application is performed also during the movement of the conductive material P in the cavity C. Thus, a temperature drop of the conductive material P moving in the cavity C can be moderated more advantageously. This means that a decrease in flowability of the conductive material P can be prevented or reduced more advantageously, so that the cavity C can be filled with the melted conductive material P up to an end portion of the cavity C more advantageously. As a result, defective appearance, e.g., a weld mark, of the molded article due to insufficient filling of the cavity C with the conductive material P can be avoided more advantageously.

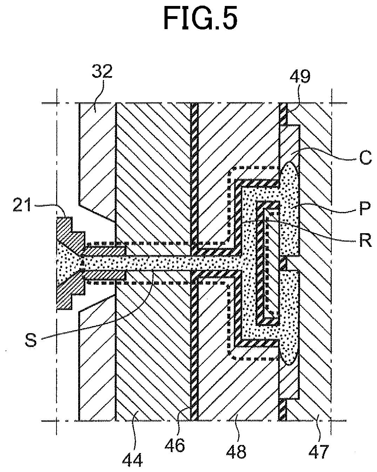

The mold device 4 is not limited to a direct gate injection type having a linear sprue S. For example, as illustrated in FIG. 5, the mold device 4 may be a pin gate injection type having a sprue S and runners R branched from the sprue S. In the pin gate injection type, a static mixer may be provided in an area of the sprue S upstream of the branched portion, and the conductive material P may be mixed by the static mixer. This means that the conductive substances contained in the conductive material P can be uniformly dispersed "upstream of the branched portion." Thus, the conductive material P containing uniformly dispersed conductive substances can be injected into the cavity C through each of the runners "downstream of the branched portion." The pin gate injection type is not limited thereto. For example, a static mixer may be provided in an area of the runner R downstream of the branched portion, and the conductive material P may be mixed by the static mixer. This means that the conductive material P containing the conductive substances which have been uniformly dispersed "downstream of the branched portion" can be injected into the cavity C through each of the runners.

FIG. 1 illustrates a linear sprue S as a non-limiting example. For example, a nonlinear sprue S, such as a spiral sprue, may also be used. The nonlinear sprue S has a longer sprue length than the linear sprue S. Thus, the conductive material P can be mixed much better by a static mixer provided in the area of the nonlinear sprue S, before being injected into the cavity C.

In one preferred embodiment, the static mixer 70 has the following configurations.

In one preferred embodiment, the static mixer 70 is located downstream of the sprue S (corresponding to the flow path of the conductive material). The distance between the static mixer 70 and the cavity C to be filled with the conductive material P is shortened if the static mixer 70 is located downstream of the sprue S. The short distance between the static mixer 70 and the cavity C contributes to maintaining the uniform dispersion of the conductive substances contained in the conductive material P. Thus, the cavity C can be easily filled with the conductive material P containing the uniformly dispersed conductive substances. Therefore, heat is more likely to be generated "entirely" in the cavity C due to the electric resistance of the conductive substances kept uniformly dispersed. As a result, the conductive material P can be heated uniformly in the cavity C by current application more advantageously.

In one preferred embodiment, the static mixer 70 is provided at a sprue bush. A sprue bush is a separate component attachable to the mold device 4 in order to prevent wear and damage of the injection port of the heating injection device 2 caused by the direct contact with the mold device 4 (the fixed mold 42) at the time of the injection. The static mixer 70 provided in the sprue bush enables mixture of the conductive material P without changing the internal structure of the mold device 4, which is advantageous in terms of work efficiency in installing the static mixer 70.

In this embodiment, a mixing nozzle may be used as the static mixer 70. Typically, the mixing nozzle is used to prevent uneven color of the molded article. The present embodiment is characterized in that the mixing nozzle, which is typically used to prevent uneven color, is used to disperse the conductive substances in the conductive material P.

### (Leak Current through Insulating Member between Conductive Portions)

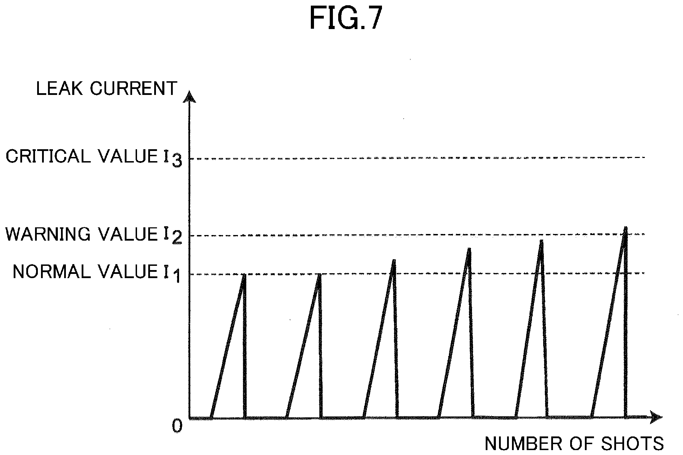

A leak current through the insulating member 49 between the conductive portions 47 and 48 will be described below with reference to FIG. 7.

The deterioration of the insulating member 49, which insulates the conductive portions 47 and 48 from each other, increases with an increase in the number of shots of the injection molding apparatus 1. Specifically, the deterioration of the insulating member 49 increases due to wear of the insulating member 49, the temperature and pressure at which the insulating member 49 is used, a voltage applied for energization, and so on. Such degradation of the insulating member 49 gradually decreases the insulation properties of the insulating member. As shown in FIG. 7, a peak value of the leak current flowing between the conductive portions 47 and 48 through the insulating member 49 at the time of heating by current application gradually increases with a decrease in the insulation properties.

The insulation properties of the insulating member 49 may decrease suddenly due to an unexpected event, such as a dent, a scratch, a deformation, overheating, overpressure, and overvoltage. A sudden decrease in insulation properties due to such an event is difficult to predict. Thus, in one preferred embodiment, the peak value of the leak current of the insulating member 49 is measured for each shot in order to monitor the insulation properties of the insulating member 49.

For this purpose, the energization controller 140 has a built-in memory or the like, in which a normal value I1, a warning value I2, and a critical value I3 that are predetermined as threshold values for determining the insulation state of the insulating member 49. A peak value of the leak current of the insulating member 49 before use is set as the normal value I1. If the peak value of the leak current measured is larger than the normal value I1 and smaller than or equal to the warning value I2 at a predetermined number of shots, it is determined that the injection molding apparatus 1 can continue to produce molded articles. If the peak value of the leak current is larger than the warning value I2 and smaller than the critical value 13, it is determined that warning needs to be given to an operator of the injection molding apparatus 1. If the peak value of the leak current is larger than or equal to the critical value 13, it is determined that the production should be stopped.

### <Sequence of Control Operations on Injection Molding Apparatus>

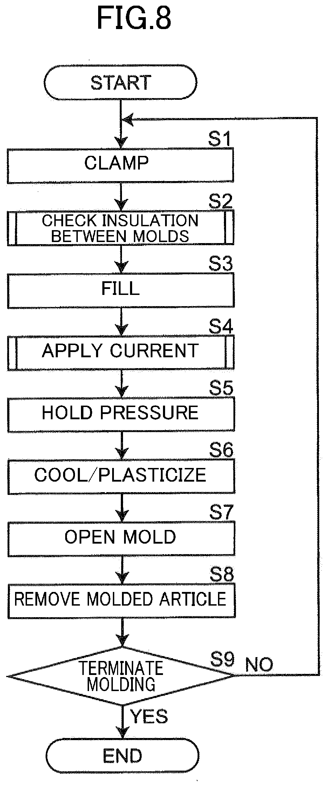

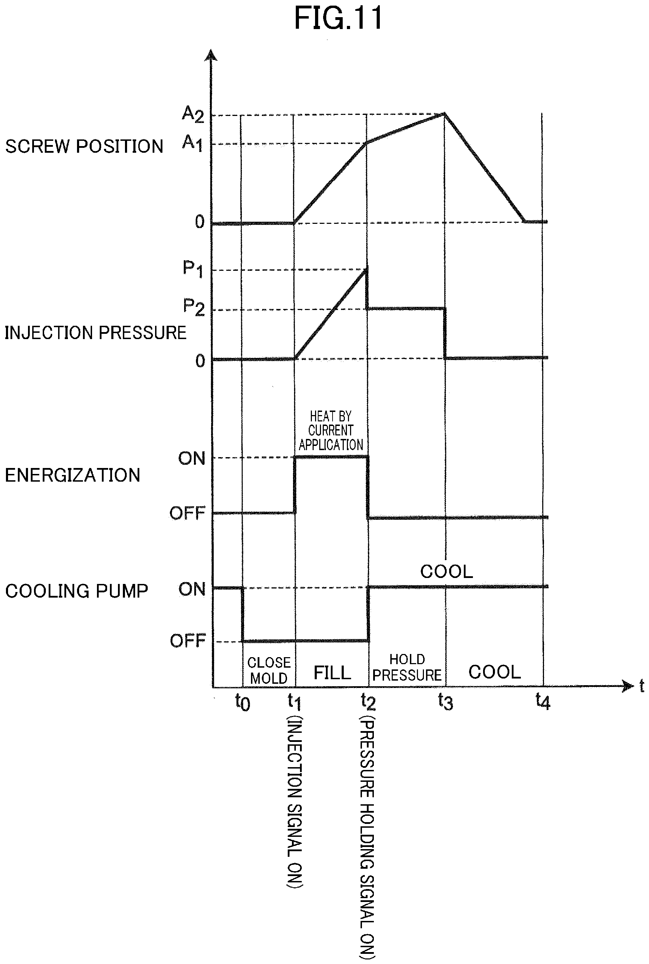

A sequence of control operations of the control unit 100 over the injection molding apparatus 1 will be described below. Specifically, the sequence of control operations on the injection molding apparatus 1 will be described with reference to the flowcharts of FIGS. 8 to 10 and the timing diagrams of FIG. 11 showing changes in screw position, injection pressure, turning ON/OFF of the current application, and turning ON/OFF of the cooling pump.

### Step S1:

First, at time t0, the clamping cylinder device 33 is actuated based on a clamping signal output from the clamping controller 120. The movable mold 41 is moved toward the fixed mold 42, causing the mold device 4 to be closed and clamped. The clamping pressure at this moment is set to be a high pressure that does not allow the mold device 4 to be open at the time of injection. Further, the cooling controller 130 stops the operation of the cooling pump 51 (switches from ON to OFF) based on the clamping signal.

### Step S2:

Next, the insulation between the movable mold 41 and the fixed mold 42 is checked.

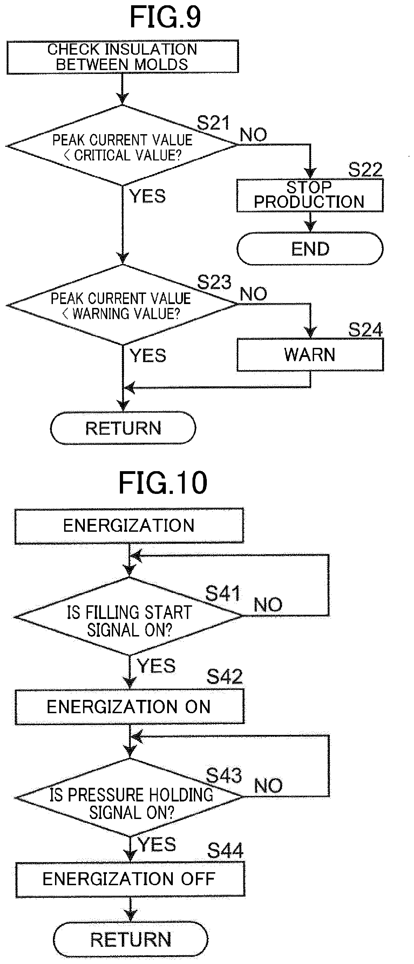

Procedures for checking the insulation between the molds in step S2 will be specifically described below with reference to FIG. 9.

First, a peak value of the leak current flowing between the conductive portions 47 and 48 is measured by the in-mold resistance sensor 63. Based on this peak value of the leak current, it is determined whether the peak value is smaller than the predetermined critical value I3 or not (step S21).

If the peak value is determined to be larger than or equal to the critical value I3 in step S21, the production of molded articles by the injection molding apparatus 1 is stopped (step S22). The production of molded articles may be restarted when the mold device 4 is replaced by new one after the stop of production of the mold articles.

If it is determined that the peak value is smaller than the critical value I3 in step S21, it is then determined whether the peak value is smaller than the predetermined warning value I2 or not (step S23).

If the peak value is determined to be larger than or equal to the warning value I2 in step S23, warning is given to the operator of the injection molding apparatus 1 through an alarm sound made by a beeper (not shown) provided at the injection molding device 1, or lighting or blinking of a warning light, for example (step S24). After giving warning to the operator of the injection molding apparatus 1, the procedure moves to the following step 3.

If it is determined that the peak value is smaller than the warning value I2 in step S23, the procedure moves to the following step 3.

The insulation between the movable mold 41 and the fixed mold 42 can be checked in this manner.

### Step S3:

Next, at time t1, the heating injection controller 110 outputs an injection signal. The output of such an injection signal causes the screw 24 to advance by the injection cylinder device 25 of the heating injection device 2 at a predetermined injection speed. As a result, the conductive material P melted by heating is injected from the injection cylinder 21. Next, the conductive material P to be injected is introduced into the static mixer 70, which is provided in the whole or part of the area including the tip portion 20 of the heating injection device 2 and the sprue S (corresponding to the flow path of the conductive material) of the mold device 4 (see FIGS 1 to 3). After that, the conductive material P introduced into the static mixer 70 is moved into the cavity C to start filling the cavity C with the conductive material P.

### Step S4:

At time t1, the energization controller 140 controls the energizing device 61 based on the injection signal. A predetermined voltage is applied to the conductive portions 47 and 48 by the energizing device 61 under control of the energization controller 140. Such a voltage application allows a current to pass through the conductive material P injected into the cavity C, from the conductive portion 48 to the conductive portion 47 (see FIG. 6). That is, a current flows from the conductive portion 48 to the conductive portion 47 through the conductive material P in the cavity C. This current application generates Joule heat due to the electric resistance of the conductive substances contained in the conductive material P. The conductive material P is heated by the current application in this manner.

Procedures of current application in step S4 will be specifically described below with reference to FIG. 10.

First, it is determined whether the injection signal output from the heating injection controller 110 to the heating injection device 2 is an ON signal or not (step S41).

If the injection signal is determined to be the ON signal in step S41, the energization controller 140 instructs the energizing device 61 to start energization (step S42).

At this moment, the energization controller 140 controls the voltage to be applied to the conductive portions 47 and 48 by the energizing device 61 so that the conductive material P injected from the heating injection device 2 is heated by the current application when coming into contact with the conductive portions 47 and 48. In the present embodiment, a predetermined constant voltage is applied to the conductive portions 47 and 48 by the energizing device 61.

Next, it is determined whether a pressure holding signal output from the heating injection controller 110 to the heating injection device 2 is an ON signal or not (step S43).

If the pressure holding signal is determined to be the ON signal in step S43, the energization controller 140 instructs the energizing device 61 to stop the energization, and the procedure moves to step 5 (step S44).

The energizing device 61 is controlled in this manner, based on the injection state of the conductive material P indicated by the control signal output from the heating injection controller 110.

### Step S5:

Next, the heating injection controller 110 outputs a pressure holding signal at time t2 at which the screw 24 has advanced to a screw position A1 where the cavity C is completely filled with the conductive material P. The heating injection device 2 is controlled based on this pressure holding signal so that a holding pressure P2, which is lower than a maximum pressure P1 at the time of injection filling, is given to the conductive material P, which fills the cavity C, until a predetermined pressure holding time has passed.

### Step S6:

Next, after a lapse of the pressure holing time, the conductive material P kept under the holding pressure is cooled for a predetermined cooling time at time t3 at which the screw 24 has advanced to a screw position A2. At the same time, in the heating injection device 2, the band heater 23 heats the conductive material P to a temperature that allows the conductive material P to melt and flow for the next shot, and the screw 24 is rotated to be retracted to a predetermined position. At this moment, the conductive material P supplied from the hopper 22 is heated and melted in the injection cylinder 21, and is held at a distal end portion of the screw 24 as a result of the retraction of the screw 24.

### Step S7:

Next, at time t4, when cooling is completed, the clamping controller 120 controls the clamping device 3 so that the clamping piston 33a of the clamping cylinder device 33 is retracted and the mold device 4 is opened.

### Step S8:

Next, the molded article is pushed out of the cavity C using the ejector.

### Step S9:

Lastly, whether the molding should be terminated or not is determined. If the termination of the molding is determined, the injection molding cycle is terminated.

In this manner, in step S3, the conductive material P to be injected is introduced into the static mixer 70, which is provided in the whole or part of the area including the tip portion 20 of the heating injection device 2 and the sprue S (corresponding to the flow path of the conductive material). The conductive material P introduced in the static mixer 70 repeatedly undergoes a process in which the fluid conductive material P is divided into upper and lower flows (see FIGS. 2 and 3A) and a process in which the upper and lower flows of the fluid conductive material P is divided into left and right flows (see FIGS. 2 and 3B). Repeatedly dividing the flow of the fluid conductive material P into "upper and lower" flows and "left and right" flows "alternately" in the static mixer 70 contributes to mixing the conductive material P without a driving system for applying a mixing force to the conductive material P. The conductive material P is mixed by the static mixer 70 in this manner, allowing the conductive substances contained in the conductive material P to disperse uniformly.

The conductive material P after step 3 contains uniformly dispersed conductive substances. Thus, the following effects can be obtained if a current is applied to such a conductive material P by applying a voltage to the conductive portions 47 and 48. Specifically, Joule heat is generated not locally, but "entirely" in the cavity C due to the electric resistance of the uniformly dispersed conductive substances. Thus, uniform heating of the conductive material P by current application can be achieved in the cavity C.

Such uniform heating by current application is performed while the conductive material P is moving in the cavity C. Thus, a temperature drop of the conductive material P moving in the cavity C can be moderated more advantageously. This means that a decrease in flowability of the conductive material P can be prevented or reduced more advantageously, so that the cavity C can be filled with the melted conductive material P up to an end portion of the cavity C more advantageously. As a result, defective appearance, e.g., a weld mark, of the molded article due to insufficient filling of the cavity C with the conductive material P can be avoided more advantageously.

Such uniform dispersion, in the cavity C, of the conductive substances contained in the conductive material P can contribute to uniform conductivity of the thus obtained molded article. Therefore, electrostatic coating or the like can be suitably performed on the obtained molded article due to uniform conductivity of the obtained molded article.

Moreover, in step 4, as described above, a voltage application to the conductive portions 47 and 48 allows a current to pass through, and thereby heating, the conductive material P in the cavity C present between the conductive portions 47 and 48. That is, the conductive material P itself is heated by current application, and it is not that the entire mold device having a larger heat capacity than the conductive material P is heated to heat the conductive material P indirectly. Thus, the temperature of the mold device cannot be higher than necessary, which can save time for cooling the mold device and the molded article. It is therefore possible to reduce prolongation of an injection molding cycle from injection to unloading the molded article.

The present invention is not limited to the exemplary embodiment. Various improvements and design changes can be made without departing from the scope of the present invention.

### INDUSTRIAL APPLICABILITY

As can be seen from the foregoing description, the injection molding apparatus according to an embodiment of the present invention can be suitably used in the production of automobile components, such as bumpers, or the production of a frame for a liquid crystal display, or the like.

### DESCRIPTION OF REFERENCE CHARACTERS

- 1: Injection Molding Apparatus
- 2: Heating Injection Device (Heating Injection Means)
- 20: Tip Portion of Heating Injection Device (Heating Injection Means)
- 4: Mold Device (Mold)
- 47, 48: Conductive Portion
- 49: Insulating Member
- 61: Energizing Device (Energizing Means)
- 70: Static Mixer
- C: Cavity
- P: Conductive Material
- S: Sprue (Flow Path of Conductive Material)

## Claims

1. An injection molding apparatus comprising:
a heating injection means which heats a conductive material to a temperature that allows the conductive material to melt and flow, and which injects the conductive material into a mold, wherein
the mold has a plurality of conductive portions at least at a portion of a surface defining a cavity, the conductive portions being insulated from each other,
the injection molding apparatus has an energizing means which applies a predetermined voltage to the conductive portions, and
a static mixer is provided in an area including a tip portion of the heating injection means and a flow path of the conductive material.

2. The injection molding apparatus of claim 1, wherein
the conductive material is a resin material containing a conductive substance, and
the static mixer is a mixer for dispersing the conductive substance in the conductive material.

3. The injection molding apparatus of claim 1 or 2, wherein
the static mixer is provided in an area downstream of the flow path of the conductive material.

4. The injection molding apparatus of any one of claims 1 to 3, wherein
the static mixer is provided at a sprue bush.

5. An injection molding method for injection-molding an article by injecting a conductive material into a mold, the method comprising:
a heating injection step of heating the conductive material to a temperature that allows the conductive material to melt and flow, and injecting the conductive material into the mold, by using a heating injection means; and
an energizing step of applying a voltage to a plurality of conductive portions such that the conductive material injected is heated by current application when the conductive material comes into contact with the plurality of conductive portions, the conductive portions being provided at least at a portion of a surface of the mold defining a cavity and being insulated from each other, wherein
the conductive material is mixed prior to being introduced into the cavity, by a static mixer provided in an area including a tip portion of the heating injection means and a flow path of the conductive material.

6. The injection molding method of claim 5, wherein
the conductive material is a resin material containing a conductive substance, and
the conductive substance is dispersed in the conductive material by the mixing of the conductive material.
